Europäisches Patentamt

European Patent Office

Office européen des brevets

(19)

(11) **EP 0 559 519 B1**

(12) **FASCICULE DE BREVET EUROPEEN**

(45) Date de publication et mention
de la délivrance du brevet:
**17.04.1996 Bulletin 1996/16**

(51) Int. Cl.$^6$: **B01J 37/02**, B01J 23/85

(21) Numéro de dépôt: **93400450.8**

(22) Date de dépôt: **22.02.1993**

(54) **Nouvelle solution aqueuse pour l'imprégnation de supports de catalyseur, catalyseurs préparés à partir de cette solution et applications de ces catalyseurs**

Neue wässrige Lösung zum Imprägnieren von Katalysatorträgern, die Katalysatoren bereitet mit dieser Lösung und ihre Verwendung

New aqueous solution for impregnating catalyst supports, catalysts prepared with this solution and use of these catalysts

(84) Etats contractants désignés:
**AT BE CH DE DK ES FR GB GR IE IT LI LU MC NL PT SE**

(30) Priorité: **06.03.1992 FR 9202741**

(43) Date de publication de la demande:
**08.09.1993 Bulletin 1993/36**

(73) Titulaire: **TOTAL RAFFINAGE DISTRIBUTION S.A.**
**F-92800 Puteaux (FR)**

(72) Inventeurs:
 • **Poulet, Olivier**
 **27500 Ste Croix Sur Aizier (FR)**

 • **Bourgogne, Michel**
 **F-76620 Le Havre (FR)**
 • **Moldan, Philippe**
 **F-76610 Le Havre (FR)**

(74) Mandataire: **Jolly, Jean-Pierre et al**
 **Cabinet Jolly**
 **54, rue de Clichy**
 **F-75009 Paris (FR)**

(56) Documents cités:
 **EP-A- 0 181 035          EP-A- 0 189 635**
 **US-A- 4 080 286**

## Description

La présente invention concerne une nouvelle solution aqueuse pour l'imprégnation de supports de catalyseur. L'invention concerne également les catalyseurs préparés à partir d'une telle solution et les applications de ces catalyseurs.

L'invention vise plus particulièrement les catalyseurs utilisés dans l'hydrotraitement de coupes pétrolières et, notamment, les catalyseurs d'hydrodésulfuration.

Les charges traitées dans de tels procédés d'hydrotraitement proviennent, par exemple, du fractionnement du pétrole brut, par distillation à pression atmosphérique, puis sous pression réduite, ou encore d'une unité de craquage (notamment de la fraction connue sous le nom de L.C.O., c'est-à-dire, en anglais, "light cycle oil", ou, en français, diluant léger catalytique).

Les produits obtenus doivent être désulfurés avant leur emploi comme carburants ou comme combustibles, et les législations actuelles imposent une diminution sans cesse plus marquée de la teneur de ces produits en composés soufrés et azotés.

Pour répondre à ces exigences en matière de désulfuration, il est possible d'agir sur les conditions de mise en oeuvre du procédé d'hydrotraitement. On peut, en particulier, diminuer la quantité de charge traitée, mais ceci a pour effet de diminuer le volume produit par l'unité de traitement et d'en augmenter le coût de fonctionnement.

On peut également augmenter la capacité de traitement ou accroître la pression de mise en oeuvre du procédé, mais ceci implique une modification des installations et, par conséquent, des investissements considérables et des délais de réalisation beaucoup trop longs.

Dans une certaine mesure, on peut aussi accroître la température de mise en oeuvre de la réaction d'hydrodésulfuration, mais ceci se traduit généralement par une diminution de la durée de vie du catalyseur utilisé.

De tels catalyseurs comprennent fréquemment un support à base d'un oxyde réfractaire poreux, sur lequel est présent au moins un métal des groupes VIII, IV A et VI A de la classification périodique (voir, par exemple, FR-A-2 490 507, FR-A-2 560 789, FR-A-2 598 631 et FR-A-2 598 632).

Ces catalyseurs comprennent par exemple un support d'alumine, sur lequel sont déposés du cobalt et/ou du nickel et du molybdène et/ou du tungstène, généralement présents sous forme d'oxydes, à l'issue du traitement de préparation du catalyseur.

La durée de vie et l'activité de tels catalyseurs sont limitées par un empoisonnement progressif des sites actifs par le soufre et, également, suivant la nature de la charge traitée, par les produits azotés, les métaux ou les produits à hauts poids moléculaires présents, favorisant la formation du coke.

Il est connu également d'utiliser dans de tels catalyseurs, outre les oxydes de cobalt (et/ou de nickel) et de molybdène (et/ou de tungstène), de l'oxyde de zirconium ou de titane, seul (voir FR-A-1 437 252, US-A-4 080 286) ou éventuellement associé à du phosphate (voir US-A- 3 791 967 et US-A-3 546 105).

Le zirconium est incorporé au catalyseur soit lors de la préparation du support, par coprécipitation avec celui-ci à partir d'une même solution, soit par mélange avec ce support sous forme solide ou pâteuse (voir US-A- 4 490 479), soit enfin par imprégnation de ce support à partir de solutions aqueuses (voir US-A- 4 344 867).

Cette dernière méthode utilise habituellement une double imprégnation du support (voir US-A- 1 437 252 et US-A- 3 840 473). Le support est d'abord imprégné à l'aide d'une solution d'un sel de zirconium, cette première imprégnation étant suivie d'un séchage et d'une calcination. Il est ensuite imprégné, en une ou plusieurs phases, à l'aide d'une solution d'un sel de nickel ou de cobalt (nitrate, par exemple) et d'une solution d'un composé du molyodène (paramolybdate d'ammonium, par exemple), ces imprégnations étant elles aussi suivies d'un séchage et éventuellement d'une calcination. Les catalyseurs ainsi préparés présentent des propriétés catalytiques satisfaisantes, mais leurs teneurs en oxydes de molybdène et de cobalt sont généralement trop faibles, car, à forte teneur, ces métaux, déposés par imprégnation dans une deuxième imprégnation, risquent de recouvrir les atomes de zirconium déposés préalablement.

Il serait donc souhaitable d'imprégner le support du catalyseur à l'aide d'une unique solution de composés des métaux des groupes IV A, VI A et VIII.

Par ailleurs, il est clair que, pour accroître la durée de vie des catalyseurs, il est avantageux d'augmenter la teneur en métaux actifs de la solution d'imprégnation, mais on risque alors de provoquer une précipitation de certains des composés présents, soit en raison d'un pH inapproprié de la solution ou d'une concentration trop élevée de celle-ci.

C'est à des catalyseurs de ce type que s'intéresse la présente invention et elle vise à proposer une solution aqueuse d'imprégnation stable, contenant conjointement des métaux des groupes IV A, VI A et VIII, qui se prête à une mise en oeuvre plus aisée et plus performante du procédé de préparation de ces catalyseurs par une unique imprégnation d'un support en oxyde réfractaire poreux et calcination de ce support.

L'invention a également pour but de proposer une solution aqueuse de ce type, qui contienne conjointement des concentrations en métaux des groupes IV A, VI A et VIII telles qu'elle se prête à une imprégnation d'un support en oxyde réfractaire poreux par la méthode dite du volume poreux (en anglais, "incipient wetness"), qui consiste à utiliser un volume de solution d'imprégnation voisin du volume poreux disponible dans le support.

L'invention a enfin pour but de proposer une telle solution aqueuse d'imprégnation qui' conduise à des catalyseurs d'hydrotraitement de charges pétrolières et, plus particulièrement, d'hydrodésulfuration de telles charges, qui présentent une activité catalytique supérieure à celle des catalyseurs de la technique antérieure.

A cet effet, l'invention a pour objet une solution aqueuse utilisable pour l'imprégnation d'un support de catalyseur, caractérisée en ce qu'elle contient conjointement au moins un composé d'un métal du groupe IV A, au moins un composé d'un métal du groupe VI A, au moins un composé d'un métal du groupe VIII et au moins une amine soluble dans l'eau.

La Demanderesse a établi, en effet, que la présence dans une telle solution d'imprégnation d'une amine soluble dans l'eau a pour effet d'accroître la stabilité de cette solution et d'éviter la précipitation à partir de celle-ci de certains des composés métalliques présents conjointement, même à des teneurs élevées. Plus particulièrement, la Demanderesse a établi qu'en maintenant une telle solution d'imprégnation à un pH basique, il est possible d'y incorporer des composés du zirconium ou du titane et de les maintenir à concentration élevée en solution en présence des composés du cobalt ou du nickel et des composés du molybdène ou du tungstène.

Comme amine, on pourra utiliser de l'éthylène diamine, de la diéthanolamine, de la monoéthanolamine, de l'acide éthylène diamine tétracétique (EDTA), de la pyridine, de la pipéridine etc...

Dans la solution d'imprégnation, pourront également être présents les additifs usuels de la technique, en particulier des agents neutralisants ou précipitants, tels que l'ammoniaque, la soude, la potasse, du carbonate d'ammonium, des ammoniums quaternaires, des tartrates etc..

Une telle solution d'imprégnation pourra par exemple présenter une concentration au moins égale à 150 grammes par litre de l'ensemble des métaux des trois groupes IV A, VI A et VIII. La concentration en métal du groupe IV A, zirconium ou titane, pourra être comprise entre 15 et 22 g/l de solution d'imprégnation.

De même, les concentrations en métal du groupe VI A (molybdène et tungstène) et en métal du groupe VIII (cobalt ou nickel) pourront respectivement être comprises entre 113 et 333 g/l et entre 23 g/l et 108 g/l.

Le rapport atomique entre la quantité du métal du groupe VIII et la quantité de métal du groupe VI A sera avantageusement compris 0,33 et 0,54, tandis que le rapport molaire entre la quantité de composé du métal du groupe VI A et de l'amine présente dans la solution sera de préférence inférieur ou égal à 0,75.

L'invention a également pour objet un procédé de préparation d'un catalyseur, caractérisé en ce qu'il comprend une unique étape d'imprégnation d'un support minéral poreux à l'aide d'une solution aqueuse d'imprégnation telle que décrite ci-dessus, cette étape d'imprégnation étant suivie, de façon connue en soi, d'une étape de séchage et d'une étape de calcination.

Par calcination, on entend un traitement thermique consistant à porter le catalyseur à une température d'au moins 350°C pendant au moins 1 heure.

Comme il a été indiqué ci-dessus, l'étape d'imprégnation du support poreux s'effectuera avantageusement par la méthode dite du volume poreux, c'est-à-dire que le volume de la solution d'imprégnation sera de préférence compris entre environ 90 et environ 120% du volume poreux du support.

Celui-ci pourra être une alumine, une alumine siliciée, une silice, un oxyde de zirconium ou similaire. De préférence, ce support sera constitué par une alumine, de grande surface et de grand volume poreux, supérieur à 0,5 cm$^3$/g et, de préférence, supérieur à 0,9 cm$^3$/g.

L'invention a également pour objet un catalyseur d'hydrotraitement d'hydrocarbures préparé par le procédé qui vient d'être décrit et, plus particulièrement, un catalyseur d'hydrodésulfuration de charges pétrolières, caractérisé en ce que le rapport entre la teneur de l'ensemble des métaux du groupe IV A, du groupe VI A et du groupe VIII présents sur le catalyseur, exprimée en oxydes, et le volume poreux du support est compris entre 16 et 35 g/cm$^3$ et, de préférence, entre 18 et 32 g/cm$^3$.

Le rapport entre la quantité de métaux du groupe VI A présents sur le catalyseur, exprimée en oxydes, et le volume poreux du support sera de préférence compris entre 14 et 30 g/cm$^3$, tandis que le rapport entre la quantité de métaux des groupes VI A et VIII, exprimée en oxydes, et le volume poreux du support sera compris entre 14 et 33 g/cm$^3$.

L'invention a enfin pour objet l'utilisation d'un catalyseur du type qui vient d'être mentionné dans un procédé de traitement d'hydrocarbures contenant des composés soufrés et/ou des composés azotés, notamment dans un procédé de traitement de charges pétrolières contenant 0,01 à 2,5 % en poids de composés soufrés et/ou 10 à 1500 ppm de composés azotés.

Dans les exemples qui suivent, on décrira divers modes de mise en oeuvre de l'invention et on comparera les résultats obtenus à ceux du procédé de la technique antérieure. Ces exemples n'ont, bien entendu, aucun caractère limitatif.

Les Exemples 1 à 6 et 11 à 13 concernent la préparation de catalyseurs par le procédé conforme à l'invention. Les Exemples 7 à 10 concernent la préparation de catalyseurs par des procédés antérieurs. L'Exemple 12 se rapporte à des essais d'hydrodésulfuration utilisant les catalyseurs préparés dans les autres exemples.

EXEMPLE 1

1) Préparation de la solution d'imprégnation :

8,1 g d'heptamolybdate d'ammonium sont dissous dans 10 cm³ d'eau et 5,6 cm³ d'éthylène diamine. 5,4 g de nitrate de cobalt, dissous dans 1, 5 cm³ d'eau, sont ensuite ajoutés à la solution de molybdène. 2,55 g de la composition liquide contenant du zirconium et commercialisée sous l'appellation Bacote 20$^R$ par la société Magnesium Eleckron Ltd, sont ajoutés ensuite à la solution précédente. La solution d'imprégnatlon finale contient 284 g/l de métaux.

2) Imprégnation du catalyseur :

On dispose d'une alumine commerciale siliciée (4% en poids de silice) dont le volume poreux est égal à 1 cm³/g. Ce volume poreux a été déterminé par la méthode suivante : à partir d'un lot d'alumine de 150 grammes séchée pendant 24 heures à 120°C, on prélève 100 grammes d'alumine siliciée.
On verse de l'eau sur cette alumine, doucement, jusqu'à ce que la surface de l'alumine .siliciée apparaisse humide et que les grains soient collants. Le volume d'eau versé est sensiblement égal au volume poreux du support tel qu'utilisé dans la suite de l'essai.
Sur 21,05 g de cette alumine siliciée, on fait lentement couler 21,05 cm³ de la solution d'imprégnation préparée précédemment.

3) Séchage et calcination :

Le support, ainsi imprégné en une étape, mature à température ambiante.
Le solide imprégné est ensuite séché à 120°C pendant une nuit, puis calciné pendant 4 heures à 500°C. Le catalyseur ainsi préparé contient 22% de $MoO_3$, 5,4 % de $CoO$ et 1,7 % de $ZrO_2$, déterminés par fluorescence X.

EXEMPLE 2

On répète le mode de préparation de l'Exemple 1, mais on dissout 7,4 g d'heptamolybdate d'ammonium dans 12 cm³ d'eau et 5 cm³ d'éthylène diamine (EDA) et 5,8 g de nitrate de cobalt dans 1,5 cm³ d'eau.
On mélange les deux solutions obtenues avec 2,55 g de Bacote 20$^R$, comme dans l'Exemple 1.
On coule ensuite 22 cm³ de la solution d'imprégnation obtenue sur 22 g d'alumine siliciée.

EXEMPLE 3

On répète le mode de préparation de l'Exemple 1, mais on dissout 7 g d'heptamolybdate d'ammonium dans 14 cm³ d'eau et 4,5 cm³ d'EDA. 5,1 g de nitrate de cobalt sont dissous dans 1,5 cm³ d'eau. La quantité de Bacote 20$^R$ mélangé aux deux solutions obtenues est identique à celle utilisée dans l'Exemple 1.
On coule ensuite 22,8 cm³ de la solution obtenue sur 22,8 g d'alumine siliciée.

EXEMPLE 4

On répète le mode de préparation de l'Exemple 1, mais on dissout 6,1 g d'heptamolybdate d'ammonium dans 16 cm³ d'eau et 4 cm³ d'EDA. 4,8 g de nitrate de cobalt seul sont dissous dans 1, 5 cm³ d'eau. La quantité de Bacote 20$^R$ est la même que celle mise en oeuvre de l'Exemple 1.
On coule ensuite 23,34 cm³ de la solution d'imprégnation sur 23,34 g d'alumine siliciée.

EXEMPLE 5

On répète le mode de préparation de l'Exemple 1, mais on dissout le composé de molybdène dans 8 cm³ de monoéthanolamine, mélangée à 7,6 cm³ d'eau. Les étapes suivantes sont identiques à celles de l'Exemple 1.
On coule ensuite 21,05 cm³ de la solution d'imprégnation sur 21,05 g d'alumine siliciée.

EXEMPLE 6

On répète le mode de préparation de l'Exemple 5, mais on utilise de l'ammonium dimolybdate (7,2 g) comme sel de molybdène.
Toutes les autres étapes sont identiques à celles de l'Exemple 1.
On coule ensuite 21,05 cm³ de la solution d'imprégnation sur 21,05 g d'alumine siliciée.

EXEMPLE 7

Dans une première étape, 2,55 g de Bacote 20$^R$ sont ajoutés à 21 cm$^3$ d'eau. 23,5 g d'alumine siliciée sont imprégnés de cette solution. On laisse le mélange maturer à température ambiante, puis le produit est mis à sécher pendant une nuit en étuve à 120°C.

Dans une seconde étape, 6,1 g d'heptamolybdate d'ammonium sont dissous dans 15,6 cm$^3$ d'eau, d'une part, et 4,80 g de nitrate de cobalt sont dissous dans 1,5 cm$^3$ d'eau, d'autre part. Les deux solutions sont ensuite mélangées, puis on en imprègne de façon simultanée les 23,5g d'alumine précédemment imprégnée avec le Bacote 20$^R$.

Après maturation à température ambiante le prbduit est mis à sécher pendant une nuit en étuve à 120°C, puis calciné pendant 4 heures à 500°C.

EXEMPLE 8

On procède à l'imprégnation de 23,5 g de support d'alumine siliciée dans les mêmes conditions que dans la première étape de l'Exemple 7.

Dans une première étape, 6,1 g d'heptamolybdate d'ammonium sont dissous dans une solution contenant 12 cm$^3$ d'eau et 2,37 g d'acide orthophosphorique.

Une solution contenant 4,80 g de nitrate de cobalt dissous dans 1, 5 cm$^3$ d'eau est versée dans la solution contenant le molybdène.

La solution finale obtenue est versée sur l'alumine siliciée, On laisse le mélange maturer à température ambiante. Le produit est ensuite mis à sécher pendant une nuit en étuve à 120°C, puis calciné pendant 4 heures à 500°C.

EXEMPLE 9

On répète le mbde de préparation de l'Exemple 8, sur 22 g d'alumine siliciée, mais on dissout 7,4 g d'heptamolybdate d'ammonium dans une solution contenant 11 cm$^3$ d'eau et 2,37 g d'acide orthophosphorique.

Une solution contenant 5,8 g de nitrate de cobalt dissous dans 1, 5 cm$^3$ d'eau est ajoutée ensuite à la solution contenant le molybdène.

EXEMPLE 10

On répète le mode de préparation de l'Exemple 8, sur 21,05 g d'alumine siliciée, mais on dissout 8,16 g d'heptamolybdate d'ammonium dans 10 cm$^3$ d'eau et 2,37 g d'acide orthophosphorique.

Une solution contenant 6,30 g de nitrate de cobalt dissous dans 1,5 cm$^3$ d'eau est ajoutée ensuite à la solution contenant le molybdène.

EXEMPLE 11

Cet exemple concerne la réalisation d'une solution aqueuse d'imprégnation à haute teneur de molybdène.

On dissout 9,27 g d'heptamolybdate d'ammonium dans 9 cm$^3$ d'eau et 6,2 cm$^3$ d'éthylène diamine.

7,16 g de nitrate de cobalt sont dissous dans 2 cm$^3$ d'eau et la solution obtenue est mélangée avec la solution contenant le sel de molybdène et l'éthylène diamine.

2,55 g de Bacote 20$^R$ sont ajoutés à la solution contenant les sels de cobalt et de molybdène et l'éthylène diamine.

La solution finale obtenue est versée sur 20, 2 g d'alumine siliciée. On laisse le mélange maturer à température ambiante. Le prbduit est ensuite mis à sécher pendant une nuit en étuve à 120°C, puis calciné pendant 4 heures à 500°C.

EXEMPLE 12

Cet exemple concerne la réalisation de la même solution d'imprégnation que celle réalisée à l'exemple 1, quant aux teneurs en éléments, mais en utilisant un autre précurseur pour le zirconium.

8,1 g d'heptamolybdate d'ammonium sont dissous dans 10 cm$^3$ d'eau et 5,6 cm$^3$ d'éthylène diamine.

5,4 g de nitrate de cobalt, dissous dans 1,5 cm$^3$ d'eau, sont ensuite ajoutés à la solution de molybdène.

2,5 g d'acide tartrique est ajouté à la solution précédente, puis 4,45 g de chlorure de zirconyle.

Cette phase de préparation est suivie d'une étape d'imprégnation, de séchage et de calcination.

EXEMPLE 13

Cet exemple concerne la réalisation de la même solution d'imprégnation que celle réalisée aux exemples 1 et 12, quant aux teneurs en élément, mais en utilisant un autre précurseur pour le zirconium.

Ainsi, à la solution de sel de molybdène, de cobalt sont ajoutés 5 g d'hydrogènocarbonate d'ammonium ($NH_5 CO_3$) et 3,2 g de nitrate de zirconyle.

Les essais réalisés ci-après ont pour but de comparer les résultats obtenus en utilisant un catalyseur préparé selon des procédés classiques (sans amine : exemple 7; sans amine et en milieu acide : exemples 8,9, 10) et un catalyseur préparé conformément à l'invention (exemples 12 et 13), dans un procédé d'hydrodésulfuration.

On a utilisé dans ce but une coupe de gazole et un mélange 50/50 en volume de ce gazole et d'un diluant catalytique léger ("light cycle oil" ou LCO).

Les catalyseurs ont été préalablement sulfurés à 375°C à l'aide d'une coupe pétrolière du type gazole contenant 1% en poids de diméthyldisulfure.

Les caractéristiques des coupes pétrolières utilisées et les conditions opératoires sont rassemblées dans le Tableau 1 ci-après.

TABLEAU 1

|  | Essai avec le gazole | Essai avec le mélange gazole/LCO |
|---|---|---|
| S (% en poids) | 1, 19 | 1, 43 |
| Densité à 15°C | 0,8506 | 0,8916 |
| VVH ($h^{-1}$)* | 2,6 | 2,6 |
| $H_2$/HC(nl/l)** | 150 | 150 |
| $pH_2$(bar) | 30 | 30 |
| T(°C) | 340 | 340 |

\* Vitesse spatiale horaire (volume de mélange réactionnel traité par volume de catalyseur et par heure).
\*\* Rapport hydrogéne/hydrocarbure (normaux-litres par litre).

Les résultats obtenus avec les catalyseurs des Exemples 1 à 13 sont rassemblés dans les Tableaux 2 à 4.

Le taux de désulfuration, noté % HDS, représente le rapport de la teneur Ss en soufre de la charge désulfurée (soufre en sortie du réacteur) sur la teneur Se en soufre de la charge (soufre à l'entrée du réacteur) multiplié par 100

$$\% \text{ HDS} = \frac{\text{teneur Ss}}{\text{teneur Se}} \times 100$$

Le Tableau 2 permet de comparer favorablement des catalyseurs préparés selon l'invention (Exemple n°4) et selon des procédés usuels de préparation (Exemples 7 et 8) ayant des teneurs totales en oxydes de cobalt, molybdène et zirconium de 22,5%.

Le Tableau 3 permet de comparer encore plus favorablement des catalyseurs préparés selon l'invention (Exemples 2,1 et 11, 12 et 13) et des catalyseurs préparés par imprégnation en deux étapes, en milieu acide (Exemples 9 et 10) à des teneurs totales en oxydes de cobalt, de molybdène et de zirconium de 26,6, de 29,1 et de 32,8%.

L'effet technique très positif de la mise en oeuvre des moyens de l'invention se fait sentir lorsque la charge traitée est riche en soufre (LCO) difficile à désulfurer, ce qui est partiellement recherché.

TABLEAU 2

| Exemples n° | Teneur en oxydes du catalyseur (CoO,MoO$_3$,ZrO$_2$)(%) | Support (Volume poreux) | Procédé d'imprégnation | TEST HDS (%) | |
|---|---|---|---|---|---|
| | | | | Gazole | Gazole/LCO |
| 7 | 22,2 (4,0+16,5+1,7) | Alumine siliciée (1cm$^3$/g) | 2 étapes d'imprégnation: -1ère Etape : Zr -2èmé Etape : Mo+Co milieu neutre, sans amine | 85,2 | 80,7 |
| 8 | -d°- | -d°- | 2 étapes d'imprégnation: -1ère Etape : Zr -2ème Etape :Co+Mo acide +Phosphore | 84,8 | 81,7 |
| 4 | -d°- | -d°- | Selon l'invention | 85,6 | 82 |

TABLEAU 3

| Exemple n° | Teneur en oxydes du catalyseur (CoO,MoO$_3$,ZrO$_2$) (%) | Support (Volume poreux cm$^3$/g) | Procédé d'imprégnation | TEST HDS (%) | |
|---|---|---|---|---|---|
| | | | | Gazole | Gazole/LCO |
| 9 | 26,6 (4,9+20+1,7) | Alumine (1cm$^3$/g) | 2 étapes d'imprégnation milieu acide (H$_3$PO4) | 85,7 | 82,9 |
| 2 | 26,6 -d°- | -d°- | 1 seule imprégnation en milieu basique selon l'invention | 88,3 | 84 |
| 10 | 29,1 (5,4+22+1,7) | -d°- | 2 étapes d'imprégnation milieu acide H$_3$PO$_4$ | 86,9 | 83 |
| 1 | 29,1 -d°- | -d°- | 1 seule imprégnation en milieu basique selon l'invention | 90,1 | 86 |
| 11 | 32,8 (6+25+1,7) | -d°- | 1 seule imprégnation en milieu basique selon l'invention | 88,2 | 84,3 |
| 12 | 29,1 (5,4+22+1,7) | -d°- | 1 seule imprégnation en milieu basique selon l'invention | 90 | 85,9 |
| 13 | 29,1 (5,4+22+1,7) | -d°- | 1 seule imprégnation en milieu basique selon l'invention | 90,2 | 86,2 |

## TABLEAU 4

| Exemple | Solution d'imprégnation Mo(Mole/l) amine Mole/l | Mo g/l | Co g/l | Zr g/l | Support (type) Volume poreux $cm^3$ g/l | $\frac{Co}{Mo}$ Rapport atomique | $\frac{CoO+MoO_3+ZrO_3}{Vp}$ $(g/cm^3)$ $(CoO+MoO_3+ZrO_2)$ (%) | TEST D'HYDRO-DESULFURATION Gazole | TEST D'HYDRO-DESULFURATION Gazole/LCO 50/50 |
|---|---|---|---|---|---|---|---|---|---|
| 1 | 0,55 (1) | 207 | 59 | 17,7 | 1 (3) | 0,46 | 29,1 (5,4+22+1,7) | 90,1 | 86 |
| 2 | 0,49 (1) | 182 | 52 | 17,1 | 1 (3) | 0,47 | 26,6 (4,9+20+1,7) | 88,3 | 84 |
| 3 | 0,5 (1) | 158 | 44 | 16,5 | 1 (3) | 0,46 | 24 (4,3+18+1,7) | 86,9 | 83,2 |
| 4 | 0,49 (1) | 141 | 40 | 16,1 | 1 (3) | 0,47 | 22,5 (4,3+16,5+1,7) | 85,6 | 82 |
| 5 | 0,39 (2) | 207 | 59 | 17,1 | 1 (3) | 0,46 | 29,1 (5,4+22+1,7) | 89,8 | 85,9 |
| 6 | 0,49 (1) | 207 | 59 | 17,1 | 1 (3) | 0,46 | 29,1 (5,4+22+1,7) | 89,6 | 85,5 |
| 11 | 0,5 (1) | 248 | 71 | 18,7 | 1 (3) | 0,46 | 32,8 (6,11+25+1,7) | 88,2 | 84,3 |
| 12 | 0,55 (1) | 207 | 59 | 17,7 | 1 (3) | 0,46 | 29,1 (5,4+22+1,7) | 90 | 85,9 |
| 13 | 0,55 (1) | 207 | 59 | 17,7 | 1 (3) | 0,46 | 29,1 (5,4+22+1,7) | 90,2 | 86,2 |

(1) éthylène diamine (2) éthanolamine (3) alumine siliciée

Comme le montre l'Exemple 11, le procédé conforme à l'invention se prête à la préparation de catalyseurs par imprégnation d'un support poreux à l'aide d'une solution à haute teneur en métaux. En revanche, les procédés usuels font intervenir une double imprégnation du support poreux, sans addition d'amine, car la solution d'imprégnation ne

EP 0 559 519 B1

permet pas d'utiliser des solutions à concentration élevée en métaux: les sels de la solution cristallisent à des concentrations nettement plus basses qu'avec la solution aqueuse conforme à l'invention.

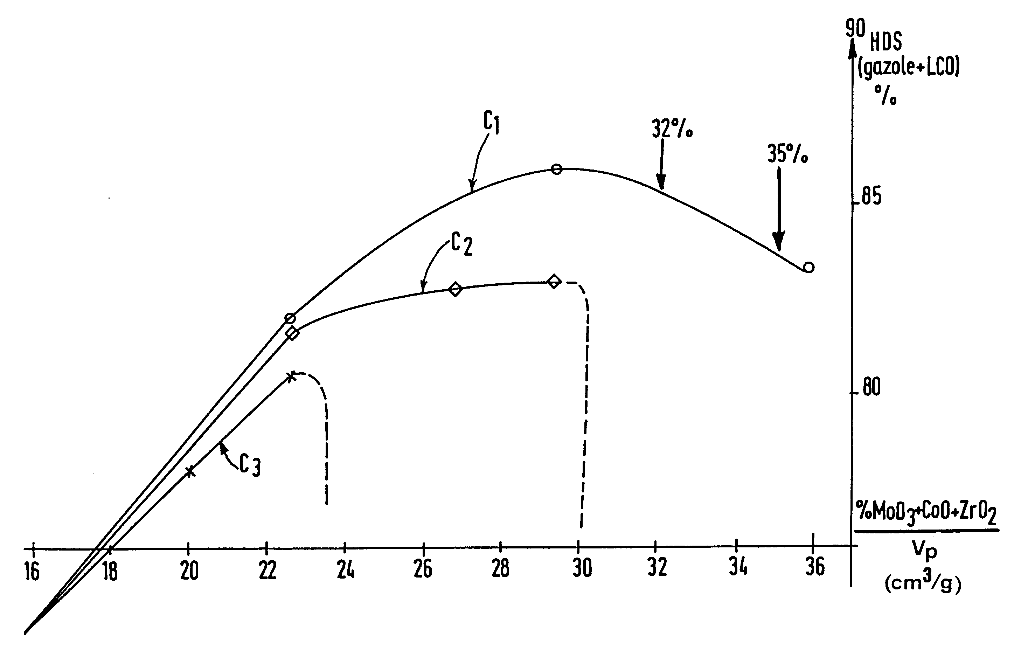

C'est ce qui ressort de la figure unique du dessin annexé, qui est un diagramme illustrant le taux de désulfuration de la coupe 50/50 gazole / LCO utilisée à l'Exemple 12, en fonction du rapport de la quantité d'oxydes $MoO_3 + CoO + ZrO_2$, exprimée en %, présents sur le catalyseur, par le volume poreux du support exprimé en $cm^3/g$.

Sur ce diagramme, la courbe $C_1$ se rapporte au catalyseur préparé conformément à l'invention , tandis que la courbe $C_2$ concerne un procédé de préparation utilisant deux imprégnations successives du support, la première par $ZrO_2$, la seconde par CoO et $MoO_3$ conjointement, la courbe $C_3$ concernant un procédé de préparation analogue à celui de $C_2$, mais avec des imprégnations en milieu acide.

La courbe $C_1$, relative à un type de support, n'est pas limitative. Son allure peut légèrement varier d'un support à un autre, tout en restant dans les limites de cette invention.

On remarquera que les catalyseurs préparés selon l'invention sont plus actifs que ceux préparés de manière classique et que leur activité, si elles varient en fonction de la teneur en oxydes et de la charge à traiter, est meilleure que celles obtenus avec les catalyseurs antérieurs.

## Revendications

1.  Solution aqueuse utilisable pour l'imprégnation d'un support de catalyseur, caractérisée en ce qu'elle contient conjointement au moins un composé d'un métal du groupe IV A, au moins un composé d'un métal du groupe VI A, au moins un composé d'un métal du groupe VIII et au moins une amine soluble dans l'eau.

2.  Solution aqueuse selon la revendication 1, caractérisée en ce qu'elle présente une concentration au moins égale à 150 g/l de l'ensemble des métaux des groupes IV A, VI A et VIII.

3.  Solution aqueuse selon l'une des revendications 1 et 2, caractérisée en ce que sa concentration en métal du groupe IV A est comprise entre 15 et 22 g/l.

4.  Solution aqueuse selon l'une des revendications 1 à 3, caractérisée en ce que sa concentration en métal du groupe VI A et en métal du groupe VIII est respectivement comprise entre 113 et 333 g/l et entre 23 et 108 g/l.

5.  Solution aqueuse selon l'une des revendications 1 à 4, caractérisée en ce que le rapport atomique entre la quantité de métal du groupe VIII et la quantité de métal du groupe VI A est compris entre 0, 33 et 0,54.

6.  Solution aqueuse selon l'une des revendications 1 à 4, caractérisée en ce que le rapport molaire entre la quantité du composé du métal du groupe VI A et de l'amine est inférieur ou égal à 0,75.

7.  Solution aqueuse selon l'une des revendications 1 à 6, caractérisée en ce que le métal du groupe VI A est le molybdène et/ou le tungstène.

8.  Solution aqueuse selon l'une des revendications 1 à 7, caractérisée en ce que le métal du groupe VIII est du cobalt et/ou du nickel.

9.  Solution aqueuse selon l'une des revendications 1 à 7, caractérisée en ce que le métal du groupe IV A est le zirconium.

10. Solution aqueuse selon l'une des revendications 1 à 8, caractérisée en ce que l'amine est l'éthyléne diamine et/ou la monoéthanolamine.

11. Procédé de préparation d'un catalyseur, caractérisé en ce qu'il comprend une unique étape d'imprégnation d'un support minéral poreux à l'aide d'une solution aqueuse d'imprégnation selon l'une des revendications 1 à 10, cette étape d'imprégnation étant suivie, de façon connue en soi, d'une étape de séchage et d'une étape de calcination.

12. Un procédé de préparation selon la revendication 11, caractérisé en ce que le volume de la solution d'imprégnation est compris entre 90 et 120% du volume poreux du support.

13. Un procédé de préparation d'un catalyseur selon l'une des revendications 11 et 12, caractérisé en ce que le support est une alumine ou une alumine siliciée.

**14.** Un procédé de préparation d'un catalyseur selon l'une des revendications 11 à 13, caractérisé en ce que le volume poreux du support est supérieur à 0,5 cm$^3$/g et, de préférence, supérieur à 0,9 cm$^3$/g.

**15.** Catalyseur d'hydrotraitement d'hydrocarbures préparé par un procédé selon l'une des revendications 11 à 14, caractérisé en ce que le rapport entre la teneur de l'ensemble des métaux déposés, exprimée en oxydes, et le volume poreux du support est compris entre 16 et 35 g/cm$^3$ et, de préférence, entre 18 et 32 g/cm$^3$.

**16.** Catalyseur d'hydrotraitement d'hydrocarbures préparé par un procédé selon l'une des revendications 11 à 14, caractérisé en ce que le rapport entre la teneur en métaux du groupe VI A du catalyseur, exprimée en oxydes, et le volume poreux du support est compris entre 14 et 30 g/cm$^3$.

**17.** Catalyseur d'hydrotraitement d'hydrocarbures préparé par un procédé selon l'une des revendications 11 à 14, caractérisé en ce que le rapport entre la teneur en métaux du groupe VI A et VIII, exprimée en oxydes, et le volume poreux du support est comprise entre 14 et 33 g/cm$^3$.

**18.** Utilisation d'un catalyseur préparé par un procédé selon l'une des revendications 11 à 14 ou conforme à l'une des revendications 15 à 17 dans un procédé de traitement d'hydrocarbures contenant des composés soufrés et/ou des composés azotés, notamment dans un procédé de traitement de coupes pétrolières contenant 0,01 à 2,5% en poids de composés soufrés et/ou 10 à 1500 p.p.m. de composés azotés.

**Claims**

**1.** An aqueous solution usable for the impregnation of a catalyst substrate, characterized in that it jointly comprises at least one compound of a metal from Group IV A, at least one compound of a metal from Group VI A, at least one compound of a metal from Group VIII and at least one water-soluble amine.

**2.** An aqueous solution according to claim 1, characterized in that it has a concentration at least equal to 150 g/l of the total of the metals from Groups IV A, VI A and VIII.

**3.** An aqueous solution according to either one of claims 1 and 2, characterized in that its concentration of metal from Group IV A is between 15 and 22 g/l.

**4.** An aqueous solution according to any one of claims 1 to 3, characterized in that its concentrations of metal from Group VI A and of metal from Group VIII are between 113 and 333 g/l and between 23 and 108 g/l respectively.

**5.** An aqueous solution according to any one of claims 1 to 4, characterized in that the atomic ratio between the quantity of metal from Group VIII and the quantity of metal from Group VI A is between 0.33 and 0.54.

**6.** An aqueous solution according to any one of claims 1 to 4, characterized in that the mole ratio between the quantity of the compound of metal from Group VI A and the amine is less than or equal to 0.75.

**7.** An aqueous solution according to any one of claims 1 to 6, characterized in that the metal of Group VI A is molybdenum and/or tungsten.

**8.** An aqueous solution according to any one of claims 1 to 7, characterized in that the metal from Group VIII is cobalt and/or nickel.

**9.** An aqueous solution according to any one of claims 1 to 7, characterized in that the metal from Group IV A is zirconium.

**10.** An aqueous Solution according to any one of claims 1 to 8, characterized in that the amine is ethylene diamine and/or monoethanolamine.

**11.** A process for preparing a catalyst, characterized in that it comprises a single stage of impregnation of a porous mineral substrate by means of an aqueous impregnation solution according to any one of claims 1 to 10, this impregnation stage being followed, in a manner known per se, by a drying stage and a calcination stage.

**12.** A preparation process according to claim 11, characterized in that the volume of impregnation solution is between 90 and 120 % of the porous volume of the substrate.

**13.** A process for preparing a catalyst according to either one of claims 11 and 12, characterized in that the substrate is an alumina or a silicon-containing alumina.

**14.** A process for preparing a catalyst according to any one of claims 11 to 13, characterized in that the porous volume of the substrate is greater than 0.5 cm$^3$/g and preferably greater than 0.9 cm$^3$/g.

**15.** A hydrocarbon hydrotreatment catalyst prepared by a process according to any one of claims 11 to 14, characterized in that the relationship between the total content of deposited metals, expressed as oxides, and the porous volume of the substrate is between 16 and 35 g/cm$^3$ and preferably between 18 and 32 g/cm$^3$.

**16.** A hydrocarbon hydrotreatment catalyst prepared by a process according to any one of claims 11 to 14, characterized in that the relationship between the content of metals from Group VI A of the catalyst, expressed as oxides, and the porous volume of the substrate is between 14 and 30 g/cm$^3$.

**17.** A hydrocarbon hydrotreatment catalyst prepared by a process according to any one of claims 11 to 14, characterized in that the relationship between the content of metals from Groups VI A and VIII, expressed as oxides, and the porous volume of the substrate is between 14 and 33 g/cm$^3$.

**18.** Use of a catalyst prepared by a process according to any one of claims 11 to 14 or according to any one of claims 15 to 17 in a process for treating hydrocarbons containing sulphurous compounds and/or nitrogenous compounds, in particular in a process for treating petroleum fractions containing from 0.01 to 2.5 % by weight of sulphurous compounds and/or from 10 to 1500 p.p.m. of nitrogenous compounds.

**Patentansprüche**

**1.** Wäßrige Lösung, welche zum Imprägnieren eines Katalysatorträgers verwendbar ist, dadurch **gekennzeichnet**, daß sie wenigstens eine Verbindung eines Metalls der Gruppe IV A, wenigstens eine Verbindung eines Metalls der Gruppe VI A, wenigstens eine Verbindung eines Metalls der Gruppe VIII und Wenigstens ein im Wasser lösliches Amin gemeinsam enthält.

**2.** Wäßrige Lösung nach Anspruch 1, dadurch **gekennzeichnet**, daß sie eine Konzentration von mindestens 150 g /l an der Gesamtheit der Metalle der Gruppen IV A, VI A und VIII aufweist.

**3.** Wäßrige Lösung nach Anspruch 1 oder 2, dadurch **gekennzeichnet**, daß ihre Konzentration an Metall der Gruppe IV A zwischen 15 und 22 g/l liegt.

**4.** Wäßrige Lösung nach Anspruch 1, 2 oder 3, dadurch **gekennzeichnet**, daß ihre Konzentration an Metall der Gruppe VI A und an Metall der Gruppe VIII zwischen 113 und 333 g/l bzw. zwischen 23 und 108 g/l liegt.

**5.** Wäßrige Lösung nach einem der Ansprüche 1 bis 4, dadurch **gekennzeichnet**, daß das Atomverhältnis zwischen der Menge an Metall der Gruppe VIII und der Menge an Metall der Gruppe VI A zwischen 0,33 und 0,54 liegt.

**6.** Wäßrige Lösung nach einem der Ansprüche 1 bis 4, dadurch **gekennzeichnet**, daß das Molverhältnis zwischen der Menge an der Verbindung des Metalls der Gruppe VI A und an dem Amin kleiner als oder gleich 0,75 ist.

**7.** Wäßrige Lösung nach einem der Ansprüche 1 bis 6, dadurch **gekennzeichnet**, daß es sich beim Metall der Gruppe VI A um Molybdän und/oder Wolfram handelt.

**8.** Wäßrige Lösung nach einem der Ansprüche 1 bis 7, dadurch **gekennzeichnet**, daß es sich beim Metall der Gruppe VIII um Kobalt und/oder Nickel handelt.

**9.** Wäßrige Lösung nach einem der Ansprüche 1 bis 7, dadurch **gekennzeichnet**, daß es sich beim Metall der Gruppe IV A um Zirkon handelt.

**10.** Wäßrige Lösung nach einem der Ansprüche 1 bis 8, dadurch **gekennzeichnet**, daß es sich beim Amin um Äthylendiamin und/oder Monoäthanolamin handelt.

**11.** Verfahren zur Herstellung eines Katalysators, dadurch **gekennzeichnet**, daß es einen einzigen Schritt zum Imprägnieren eines porösen mineralischen Trägers mit Hilfe einer wäßrigen Imprägnierlösung nach einem der Ansprüche 1 bis 10 umfaßt, auf den ein Trocknungsschritt und ein Kalzinierungsschritt folgen, wie an sich bekannt.

12. Herstellungsverfahren nach Anspruch 11, dadurch **gekennzeichnet**, daß das Volumen der Imprägnierlösung zwischen 90 und 120 % des Porenvolumens des Trägers ausmacht.

13. Verfahren zur Herstellung eines Katalysators nach Anspruch 11 oder 12, dadurch **gekennzeichnet**, daß es sich beim Träger um eine Tonerde oder eine silizierte Tonerde handelt.

14. Verfahren zur Herstellung eines Katalysators nach Anspruch 11, 12 oder 13, dadurch **gekennzeichnet**, daß das Porenvolumen des Trägers größer als 0,5 $cm^3$ / g und vorzugsweise größer als 0,9 $cm^3$ / g ist.

15. Katalysator zur Hydrobehandlung von Kohlenwasserstoffen, welcher nach dem Verfahren gemäß einem der Ansprüche 11 bis 14 hergestellt wurde, dadurch **gekennzeichnet**, daß das Verhältnis zwischen dem Gehalt an der Gesamtheit der abgelagerten Metalle, ausgedrückt in Oxyden, und dem Porenvolumen des Trägers zwischen 16 und 35 g / $cm^3$ und vorzugsweise zwischen 18 und 32 g / $cm^3$ liegt.

16. Katalysator zur Hydrobehandlung von Kohlenwasserstoffen, welcher nach dem Verfahren gemäß einem der Ansprüche 11 bis 14 hergestellt wurde, dadurch **gekennzeichnet**, daß das Verhältnis zwischen dem Gehalt an Metallen der Gruppe VI A des Katalysators, ausgedrückt in Oxyden, und dem Porenvolumen des Trägers zwischen 14 und 30 g / $cm^3$ liegt.

17. Katalysator zur Hydrobehandlung von Kohlenwasserstoffen, welcher nach dem Verfahren gemäß einem der Ansprüche 11 bis 14 hergestellt wurde, dadurch **gekennzeichnet**, daß das Verhältnis zwischen dem Gehalt an Metallen der Gruppen VI A und VIII, ausgedrückt in Oxyden, und dem Porenvolumen des Trägers zwischen 14 und 33 g / $cm^3$ liegt.

18. Verwendung des nach dem Verfahren gemäß einem der Ansprüche 11 bis 14 hergestellten Katalysators oder des Katalysators nach Anspruch 15, 16 oder 17 bei einem Verfahren zur Behandlung von Kohlenwasserstoffen, welche schwefelhaltige Verbindungen und/oder stickstoffhaltige Verbindungen enthalten, insbesondere bei einem Verfahren zur Behandlung von Erdölfraktionen, welche 0,01 bis 2,5 Gewichtsprozent an schwefelhaltigen Verbindungen und/oder 10 bis 1500 p.p.m. an stickstoffhaltigen Verbindungen enthalten.